# EUROPÄISCHE PATENTSCHRIFT

(11) **EP 2 799 269 B1**
(45) Veröffentlichungstag und Bekanntmachung des Hinweises auf die Patenterteilung: **15.01.2020**
(21) Anmeldenummer: 14166207.2
(22) Anmeldetag: 28.04.2014
(51) Int. Cl.: B60K 5/12

(54) **AUFHÄNGUNGSVORRICHTUNG FÜR ANTRIEBSAGGREGATE VON KRAFTFAHRZEUGEN**
SUSPENSION DEVICE FOR DRIVE UNITS OF MOTOR VEHICLES
DISPOSITIF DE SUPPORT POUR ENSEMBLES DE PROPULSION DE VÉHICULES AUTOMOBILES

(30) Priorität: 30.04.2013 DE 102013007473
(43) Veröffentlichungstag der Anmeldung: 05.11.2014
(73) Patentinhaber: AUDI AG, 85045 Ingolstadt (DE)
(72) Erfinder: Bujak, Marek, 91809 Wellheim (DE); Vollmann, Stefan, 85049 Ingolstadt/Gerolfing (DE); Vogel, Friedemann, 85139 Wettstetten (DE)

(56) Entgegenhaltungen:
- FR-A1- 2 744 677
- FR-A1- 2 831 111
- US-A- 4 377 218
- US-A- 4 406 344

## Beschreibung

Die vorliegende Erfindung betrifft eine Aufhängungsvorrichtung für Antriebsaggregate von Kraftfahrzeugen gemäß dem Oberbegriff des Patentanspruchs 1.

Bei Aufhängungsvorrichtungen insbesondere für durch eine Brennkraftmaschine und ein Geschwindigkeits-Wechselgetriebe mit gegebenenfalls integriertem Achsdifferenzial angetriebene Kraftfahrzeuge (zum Beispiel mit Frontantrieb) können zu den meist hydraulisch gedämpften Aggregatelagern sogenannte Stützlager parallel geschaltet sein, die das Aufhängungssystem zusätzlich versteifen bzw. unzulässige Schwingungsspitzen zum Beispiel bei Lastwechseln des Kraftfahrzeugs vermeiden helfen.

Eine gattungsgemäße Aufhängungsvorrichtung ist aus der FR 2 744 677 A1 bekannt.

Eine weitere Aufhängungsvorrichtung ist beispielsweise durch die US 4,610,420 A bekannt, bei der das parallel zu einem Aggregatelager geschaltete Stützlager durch eine zwei Lageraugen aufweisende Stange gebildet ist, die über entsprechende Gummi-Metall-Hülsenlager mit dem Aggregateträger einerseits und einem Hilfsrahmen am Fahrzeugaufbau des Kraftfahrzeugs andererseits verbunden ist, wobei das Stützlager seitlich neben dem Aggregatelager positioniert ist und dementsprechenden Einbauraum im Kraftfahrzeug benötigt.

Aufgabe der Erfindung ist es, eine Aufhängungsvorrichtung mit einem Stützlager vorzuschlagen, die weniger Einbauraum erfordert und die baulich einfach und montagegünstig ausgeführt ist.

Die Lösung dieser Aufgabe gelingt mit den Merkmalen des Patentanspruchs 1. Vorteilhafte und besonders zweckmäßige Weiterbildungen der Erfindung sind in den Unteransprüchen angeführt.

Erfindungsgemäß wird vorgeschlagen, dass der Dämpfungskörper des Stützlagers wenigstens teilweise, bevorzugt im Wesentlichen vollständig, in den Aggregateträger integriert ist und über ein je nach Einbau- oder Belastungsrichtung als Zug- oder Druckstange ausgebildetes Stangen- bzw. Bauelement an den Fahrzeugaufbau mittelbar oder unmittelbar angeschlossen ist. Die Erfindung nutzt demzufolge den Aggregateträger durch entsprechende Gestaltung unmittelbar zur teilweisen Aufnahme des Stützlagers, das gegebenenfalls am Aggregateträger vormontiert montagegünstig verbaubar ist. Über die Zug- oder Druckstange wird das Stützlager dann in einfacher Weise an den Fahrzeugaufbau angeschlossen.

Die Zug- oder Druckstange ist bevorzugt vertikal ausgerichtet, das heißt in Fahrzeughochachsenrichtung ausgerichtet, kann jedoch, falls dies aus Bauraumgründen oder aus Gründen eines Kraftflusses erforderlich sein sollte, auch winklig dazu ausgerichtet sein.

Besonders bevorzugt kann der Aggregateträger, vorzugsweise ein durch Versteifungsrippen und Hohlräume mit Gehäusewänden ausgeführter Aggregateträger (vorzugsweise ein Gussteil), einen, zum Beispiel dem Fahrzeugaufbau zugewandten, offenen Hohlraum als Aufnahmeraum aufweisen, in dem der Dämpfungskörper, der vorzugsweise in nachfolgend noch näher beschriebener Weise zwischen Lagerplatten gehalten und/oder eingeschlossen ist, aufgenommen bzw. eingesetzt ist. Damit ist der Dämpfungskörper u.a. gut gegen äußere Einflüsse (zum Beispiel auch gegen Temperaturbelastungen durch angrenzende Aggregate oder Abgasleitungen) geschützt.

Baulich besonders günstig kann die Zug- oder Druckstange den vorzugsweise hülsenförmigen Dämpfungskörper durchragen und mit dem Stützlager fest verbunden sein, zum Beispiel mit einer oberen Lagerplatte des Dämpfungskörpers fest verschraubt sein.

Gemäß einer weiteren besonders bevorzugten erfindungsgemäßen Ausgestaltung weist das Stützlager eine Lagerplatte (insbesondere eine in Fahrzeughochachsenrichtung mit Bezug zum Hohlraum untere Lagerplatte) auf, die den Hohl- bzw. Aufnahmeraum und/oder diesen begrenzende Wandabschnitte randseitig bzw. flanschartig übergreift und mit dem Aggregatträger fest verbunden ist, insbesondere mit zugeordneten Wandabschnitten des Aggregatträgers verbunden bzw. verschraubt ist. Das Stützlager kann aber alternativ bzw. gegebenenfalls auch zusätzlich in den Hohlraum eingepresst oder anderweitig fest eingesetzt sein.

In vorteilhafter Weiterbildung der Erfindung kann das Gehäuse des Aggregatelagers über die Mehrpunktbefestigung, insbesondere über eine baulich sowie konstruktions- und kraftflusstechnisch besonders vorteilhafte Dreipunktbefestigung, mit einem am Fahrzeugaufbau angeordneten Hilfsrahmen fest verbunden sein, wobei wenigstens ein, vorzugsweise ein einziger, tiefer liegender, an einem Querholm des Hilfsrahmens festgelegter und zum Aggregateträger ragender Gehäusearm und mehrere, insbesondere zwei, demgegenüber in Fahrzeughochachsenrichtung höher positionierte, an einem Längsholm des Hilfsrahmens befestigte Gehäuseflansche vorgesehen sind. Besonders bevorzugt ist in diesem Zusammenhang eine Ausführungsform, bei der die Zug- oder Druckstange des Stützlagers, vorzugsweise unmittelbar benachbart zur Querholm-Anbindungsstelle des wenigstens eines Gehäusearms, an dem Querholm angebunden bzw. angelenkt ist. Alternativ dazu kann die Lagerstelle der Zug- oder Druckstange des Stützlagers aber auch wenigstens teilweise, bevorzugt vollständig, in den Gehäusearm integriert sein. Daraus resultiert eine besonders verwindungssteife Anbindung des Aggregatelagers und des Stützlagers an einen Hilfsrahmen bzw. über diesen an den Fahrzeugaufbau, die zudem montagegünstig herstellbar ist. Zudem lässt sich insbesondere mit der integrierten Lösung eine weitere Bauraumeinsparung erzielen.

Schließlich kann der den Dämpfungskörper des Stützlagers aufnehmende Aggregateträger als Gussteil und/oder aus einer Leichtmetalllegierung hergestellt sein, wodurch die Integration des Stützlagers in den Aggregateträger nahezu ohne Mehraufwand möglich ist.

Der Dämpfungskörper selbst weist bevorzugt einen Elastomerkörper mit definierter Federsteifigkeit auf oder ist durch einen solchen gebildet. Bevorzugt weist ein derartiger Elastomerkörper eine zentrale Durchgangsöffnung auf, durch den die Zug- oder Druckstange mit einem definierten Radialspalt oder konturangepasst und damit geführt hindurchgeführt ist. Auch eine hydraulische Dämpfung kann hier in Verbindung mit einem Dämpfungskörper vorgesehen sein.

Ein Ausführungsbeispiel der Erfindung ist im Folgenden anhand der beigefügten, schematischen Zeichnung näher erläutert.

Es zeigen:
- Fig. 1: eine Frontansicht einer Aggregateaufhängung für ein Antriebsaggregat in Kraftfahrzeugen, mit teilweiser Darstellung eines Hilfsrahmens, an dem über ein Aggregatelager und ein Stützlager ein Aggregateträger abgestützt ist;
- Fig. 2: einen Querschnitt durch den Aggregateträger, das Aggregatelager und das teilweise in den Aggregateträger integrierte Stützlager, jedoch ohne Hilfsrahmen;
- Fig. 3: eine perspektivische Unteransicht des Aggregatträgers mit montierter unterer Lagerplatte.

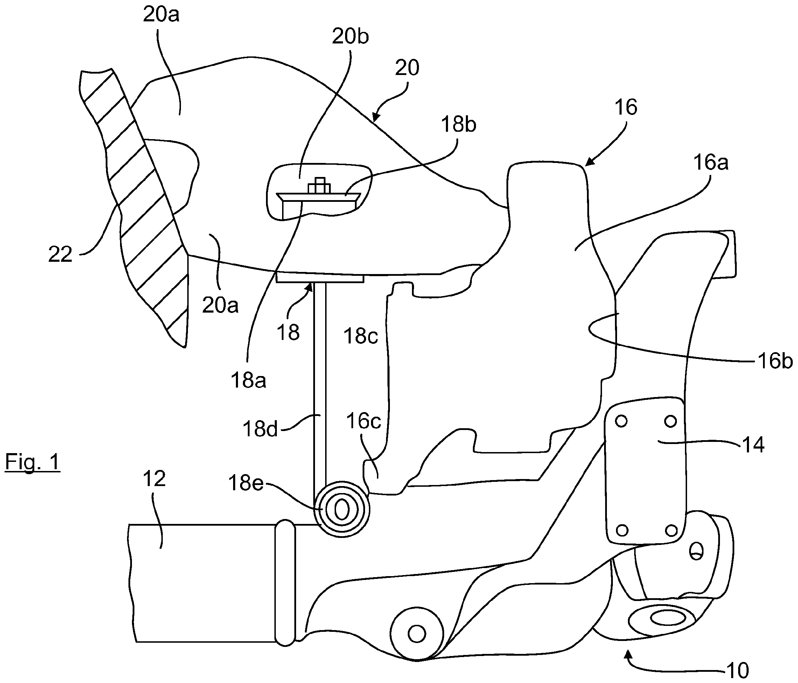

Die Fig. 1 zeigt abschnittsweise den Eckbereich eines einen Querholm 12 und einen Längsholm 14 aufweisenden Hilfsrahmens 10 an sich bekannter Bauart, an dem über eine Aufhängungsvorrichtung bzw. über ein Motor- bzw. Aggregatelager 16, ein parallel dazu angeordnetes Stützlager 18 und einen Aggregateträger 20 ein nur angedeutetes Antriebsaggregat 22, zum Beispiel eine Brennkraftmaschine mit angeschlossenem Geschwindigkeits-Wechselgetriebe, schwingungsgedämpft gelagert ist.

Die Aufhängungsvorrichtung kann Teil einer Mehrpunktaufhängung, insbesondere einer Dreipunktaufhängung oder einer Vierpunktaufhängung, des Antriebsaggregats 22 sein, wobei an der Brennkraftmaschine an beiden Längsseiten die dargestellte Aufhängungsvorrichtung spiegelbildlich gleich verwendet sein kann.

Das Gehäuse 16a des Aggregatelagers 16 ist hier beispielhaft, aber baulich und konstruktions- bzw. kraftflusstechnisch besonders vorteilhaft, an drei Befestigungspunkten fest mit dem Hilfsrahmen 10 verschraubt, wobei zwei etwa horizontal ausgerichtete und in Fahrzeughochachsenrichtung höher positionierte Befestigungspunkte durch am Gehäuse 16a angeformte Gehäuseflansche 16b (es ist nur ein Gehäuseflansch 16b ersichtlich) gebildet sind, während der dritte Befestigungspunkt durch einen unteren, zur Fahrzeugmitte hin versetzten Gehäusearm 16c gebildet ist.

Das Aggregatelager 16 ist mittels nicht dargestellter Befestigungsvorrichtungen, vorzugsweise durch Schrauben, durch die Gehäuseflansche 16b hindurch mit dem Längsholm 14 und durch den Gehäusearm 16c hindurch mit dem Querträger 12 ecksteif fest verbunden.

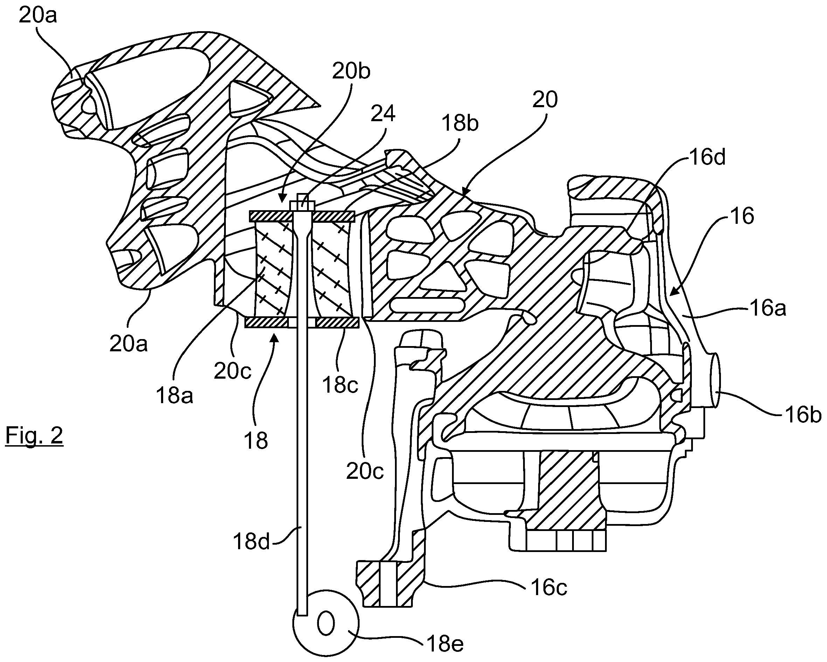

Das Aggregatelager 16 kann im Übrigen ein hydraulisch gedämpftes Lager bekannter Bauart sein, das nicht Gegenstand der Erfindung bildet und deshalb auch nicht näher erläutert ist. Der Lagerkern 16d (Fig. 2) des Aggregatelagers 16 ist mittels einer nicht dargestellten Befestigungsvorrichtung, zum Beispiel mittels einer Schraubverbindung, an den seitlich vom Antriebsaggregat 22 abragenden Aggregateträger 20 an dessen äußeres Ende angeschlossen.

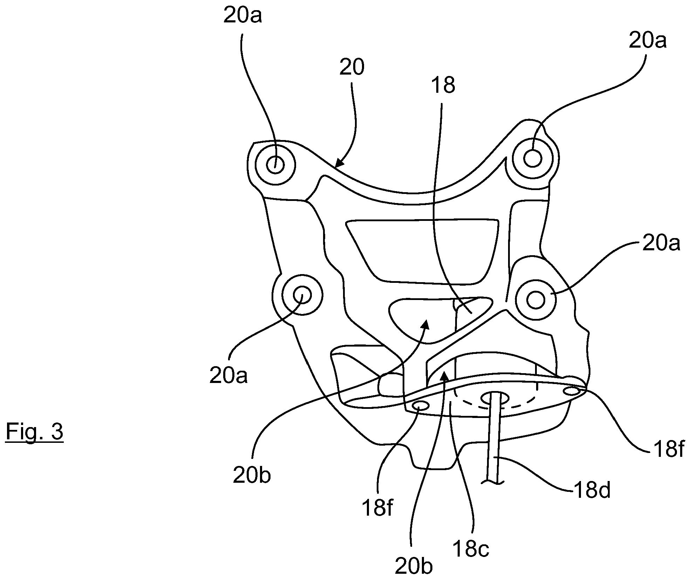

Der andererseits über Anschluss- bzw. Flanschbereiche 20a (siehe auch Fig. 3) mit dem Antriebsaggregat 22 verschraubte Aggregateträger 20 ist hier kraftflusstechnisch günstig, als sich vom Aggregat 22 weg nach außen verjüngender, armartiger Hohlkörper ausgeführt. Dieser Hohlkörper ist bevorzugt aus einer vorzugsweise im Gussverfahren, insbesondere im Druckgussverfahren, hergestellten Leichtmetalllegierung ausgeführt (vergleiche Fig. 2), der mittels innerer Versteifungsrippen und äußeren Gehäusewänden biegesteif das Antriebsaggregat 22 trägt.

In dem Aggregateträger 20 ist zudem ein nach unten offener Hohlraum 20b als Aufnahmeraum eingeformt, in den das Stützlager 18 zumindest teilweise, vorzugsweise im Wesentlichen vollständig eingesetzt ist.

Das Stützlager 18 weist einen hülsenförmigen Dämpfungskörper 18a aus vorzugsweise einem Elastomermaterial mit definierter Konfiguration bzw. Federsteifigkeit auf, der zwischen zwei, vorzugsweise am Dämpfungskörper anvulkanisierten, Lagerplatten 18b, 18c angeordnet ist.

Die das Stützlager 18 nach oben abschließende Lagerplatte 18b ist über eine Verbindungseinrichtung, hier beispielhaft über eine Schraubverbindung 24, mit einer den Dämpfungskörper 18a (gegebenenfalls unter Belassung eines Radialspaltes) durchragenden Druckstange 18d des Stützlagers 18 fest verbunden. Die Druckstange 18d ist hier gemäß einer bevorzugten Ausgestaltung senkrecht bzw. in Hochachsenrichtung ausgerichtet, könnte jedoch auch winklig ausgerichtet sein. Ferner ist die Druckstange 18d hier beispielhaft über ein unteres Lagerauge 18e und gegebenenfalls ein Gummi-Metall-Hülsenlager im nahen oder auch im entfernten Bereich des Befestigungspunkts 16c des Aggregatelagers 16 an dem Querholm 12 des Hilfsrahmens 10 angelenkt. Alternativ kann die Druckstange 18d dort aber auch starr angebunden sein, z.B. verschraubt sein.

Das untere Lagerauge 18e bzw. dessen Lagerkern kann in Fahrzeuglängsrichtung ausgerichtet mit dem zugeordneten Bauteil verschraubt sein. Sollte es aus Package- oder Bauraumgründen erforderlich sein, kann die Verschraubung aber auch hierzu winklig ausgerichtet sein.

Die untere Lagerplatte 18c des Stützlagers 18 überragt, was insbesondere aus der Fig. 3 ersichtlich ist, die Randbereiche 20c des Aufnahme- bzw. Hohlraums 20b des Aggregateträgers 20 und ist mit diesen fest verbunden, insbesondere mittels hier lediglich schematisch dargestellter Schraubverbindungen 18f verschraubt. Wie in der Fig. 3 weiter dargestellt weist die untere Lagerplatte 18c hier eine besonders vorteilhafte ovale Form auf, die den Hohlraum 20b von unten her nicht vollständig verschließt bzw. abdeckt. Falls dies aber erforderlich sein sollte, zum Beispiel zum Schutz gegen äußere Einflüsse, kann die untere Lagerplatte 18c aber auch so ausgebildet sein, dass diese den Hohlraum 20b vollständig abdeckt bzw. verschließt. Der Dämpfungskörper 18a mit den Lagerplatten 18b, 18c und gegebenenfalls einem umgebenden Gehäuse könnte aber auch in den entsprechend angepassten Hohlraum 20b des Aggregateträgers 20 eingepresst, eingeklebt, etc. sein.

Durch die parallele und besonders anbindungssteife Anordnung des in den Aggregateträger 20 integrierten Stützlagers 18 zum Aggregatelager 16 wird dessen Dämpfungsfunktion wirkungsvoll der Dämpfungsfunktion des Aggregatelagers 16 überlagert und werden gegebenenfalls auftretende, unzulässige Schwingungsspitzen zuverlässig absorbiert.

Die Erfindung ist nicht auf das dargestellte Ausführungsbeispiel beschränkt. Insbesondere sind im Rahmen der formulierten Ansprüche auch dem Fachmann geläufige Abwandlungen möglich.

Anstelle des Hilfsrahmens 10 kann die Aufhängungsvorrichtung auch unmittelbar am Fahrzeugaufbau vorgesehen sein bzw. mit entsprechenden Aufbauelementen verbunden sein. Gegebenenfalls kann das Stützlager 18 auch eine andere Konstruktion aufweisen.

## Patentansprüche

1. Aufhängungsvorrichtung für Antriebsaggregate (22) von Kraftfahrzeugen, mit einem schwingungsdämpfenden Aggregatelager (16), an dessen Lagerkern (16d) ein am Antriebsaggregat (22) festgelegter Aggregateträger (20) angeschlossen ist, sowie mit einem parallel zum Aggregatelager (16) vorgesehenen Stützlager (18), dessen Dämpfungskörper (18a) einerseits an dem Aggregateträger (20) und andererseits an dem Fahrzeugaufbau (10) angeschlossen ist, wobei der Dämpfungskörper (18a) des Stützlagers (18) wenigstens teilweise in den Aggregateträger (20) integriert ist und über eine Zug- oder Druckstange (18d) an den Fahrzeugaufbau (10) mittelbar oder unmittelbar angeschlossen ist, **dadurch gekennzeichnet, dass** das Aggregatelager (16) ein Gehäuse (16a) aufweist, das am Fahrzeugaufbau (10) abgestützt ist und das über eine Mehrpunktbefestigung mit dem Fahrzeugaufbau (10) verbunden ist.

2. Aufhängungsvorrichtung nach Anspruch 1, **dadurch gekennzeichnet, dass** der Aggregateträger (20), vorzugsweise ein durch Versteifungsrippen und Hohlräume mit Gehäusewänden (20c) ausgeführter Aggregateträger (20), einen offenen Hohlraum (20b) als Aufnahmeraum aufweist, in dem der Dämpfungskörper (18a) aufgenommen und/oder eingesetzt ist.

3. Aufhängungsvorrichtung nach den Ansprüchen 1 und 2, **dadurch gekennzeichnet, dass** die Zug- oder Druckstange (18d) den vorzugsweise hülsenförmig ausgebildeten Dämpfungskörper (18a) durchragt und mit dem Stützlager (18), vorzugsweise mit einer oberen Lagerplatte (18b) des Stützlagers (18), verbunden ist, insbesondere verschraubt ist.

4. Aufhängungsvorrichtung nach Anspruch 3, **dadurch gekennzeichnet, dass** das Stützlager (18) eine Lagerplatte (18c), insbesondere eine in Fahrzeughochachsenrichtung mit Bezug zum Hohlraum (20b) untere Lagerplatte (18c), aufweist, die den Hohlraum (20b) und/oder diesen begrenzende Wandabschnitte (20c) flanschartig übergreift und mit dem Aggregateträger (20) verbunden ist, insbesondere mit zugeordneten Wandabschnitten (20c) des Aggregateträgers (20) verbunden, insbesondere verschraubt, ist.

5. Aufhängungsvorrichtung nach einem der vorhergehenden Ansprüche, **dadurch gekennzeichnet, dass** wenigstens ein, vorzugsweise ein einziger, tiefer liegender, an einem Querholm (12) des Hilfsrahmens (10) festgelegter und zum Aggregateträger (20) ragender Gehäusearm (16c) und mehrere, vorzugsweise zwei, demgegenüber in Fahrzeughochachsenrichtung höher positionierte, an einem Längsholm (14) des Hilfsrahmens (10) befestigte Gehäuseflansche (16b) am Gehäuse (16a) des Aggregatelagers (16) zur Verbindung desselben mit einem am Fahrzeugaufbau angeordneten Hilfsrahmen (10) vorgesehen sind.

6. Aufhängungsvorrichtung nach Anspruch 5, **dadurch gekennzeichnet, dass** die Zug- oder Druckstange (18d) des Stützlagers (18), vorzugsweise unmittelbar benachbart zur Querholm-Anbindungsstelle des wenigstens eines Gehäusearms (16c), an dem Querholm (12) angebunden, insbesondere angelenkt, ist oder dass eine Lagerstelle (18e) der Zug- oder Druckstange (18d) des Stützlagers (18) wenigstens teilweise in den Gehäusearm (16c) integriert ist.

7. Aufhängungsvorrichtung nach einem der vorhergehenden Ansprüche, **dadurch gekennzeichnet, dass** der den Dämpfungskörper (18a) des Stützlagers (18) aufnehmende Aggregateträger (20) als Gussteil und/oder aus einer Leichtmetalllegierung hergestellt ist.

8. Aufhängungsvorrichtung nach einem der vorhergehenden Ansprüche, **dadurch gekennzeichnet, dass** der Dämpfungskörper (18a) einen Elastomerkörper mit definierter Federsteifigkeit aufweist oder durch einen solchen gebildet ist, der eine zentrale Durchgangsöffnung aufweist, durch den die Zug- oder Druckstange (18d) mit einem definierten Radialspalt oder konturangepasst hindurchgeführt ist.

## Claims

1. Suspension device for drive units (22) of motor vehicles, having a vibration-damping unit bearing (16), to the bearing core (16d) of which a unit carrier (20) fixed to the drive unit (22) is connected, and having a support bearing (18) provided parallel to the unit bearing (16), the damping body (18a) of which is connected, on the one hand, to the unit carrier (20) and, on the other hand, to the vehicle structure (10), wherein the damping body (18a) of the support bearing (18) is integrated at least partially in the unit carrier (20) and is connected indirectly or directly via a pull- or push rod (18d) to the vehicle structure (10), **characterised in that** the unit bearing (16) has a housing (16a), which is supported on the vehicle structure (10) and which is connected via a multi-point fastening to the vehicle structure (10).

2. Suspension device according to claim 1, **characterised in that** the unit carrier (20), preferably a unit carrier (20) made by stiffening ribs and cavities with housing walls (20c), has an open cavity (20b) as receiving space, in which the damping body (18a) is received and/or inserted.

3. Suspension device according to claims 1 or 2, **characterised in that** the pull- or push rod (18d) passes preferably through the damping body (18a) designed sleeve-shaped and is connected, in particular is screw-connected, to the support bearing (18), preferably to an upper bearing plate (18b) of the support bearing (18),

4. Suspension device according to claim 3, **characterised in that** the support bearing (18) has a bearing plate (18c), in particular a lower bearing plate (18c) in the direction of the vehicle vertical axis with respect to the cavity (20b), which bearing plate engages over the cavity (20b) and/or the wall sections (20c) defining said cavity in a flange-like manner and is connected to the unit carrier (20), in particular is connected, in particular screw-connected, to associated wall sections (20c) of the unit carrier (20).

5. Suspension device according to any one of the preceding claims, **characterised in that** at least one, preferably a single, deeper-lying, housing arm (16c), fixed to a transverse beam (12) of the auxiliary frame (10) and projecting to the unit carrier (20) and several, preferably two, housing flanges (16b) positioned in contrast higher in the direction of the vehicle vertical axis, fastened to a longitudinal beam (14) of the auxiliary frame (10) are provided on the housing (16a) of the unit bearing (16) for connecting the same to an auxiliary frame (10) arranged on the vehicle structure.

6. Suspension device according to claim 5, **characterised in that** the pull- or push rod (18d) of the support bearing (18), preferably directly adjacent to the transverse beam connecting point of the at least one housing arm (16c), is connected, in particular, articulated to the transverse beam (12) or that a bearing point (18e) of the pull- or push rod (18d) of the support bearing (18) is integrated at least partially in the housing arm (16c).

7. Suspension device according to any one of the preceding claims, **characterised in that** the unit carrier (20) receiving the damping body (18a) of the support bearing (18) is made as a cast part and/or from a light metal alloy.

8. Suspension device according to any one of the preceding claims, **characterised in that** the damping body (18a) has an elastomer body with defined spring stiffness or is formed by such, which has a central through opening, through which the pull- or push rod (18d) is guided with a defined radial gap or in a contour-adapted manner.

## Revendications

1. Dispositif de suspension pour des groupes motopropulseurs (22) de véhicules automobiles, avec un palier de groupe (16) à amortissement de vibrations, au niveau de la partie centrale de palier (16d) duquel est raccordé un support de groupe (20) fixé au niveau du groupe motopropulseur (22), ainsi qu'avec un palier d'appui (18) prévu de manière parallèle par rapport au palier de groupe (16), dont le corps d'amortissement (18a) est raccordé d'une part au support de groupe (20) et d'autre part à la carrosserie de véhicule (10), dans lequel le corps d'amortissement (18a) du palier d'appui (18) est intégré au moins en partie dans le support de groupe (20) et est raccordé indirectement ou directement par l'intermédiaire d'une tige de traction ou de pression (18d) à la carrosserie de véhicule (10), **caractérisé en ce que** le palier de groupe (16) présente un boîtier (16a), qui est soutenu au niveau de la carrosserie de véhicule (10) et qui est relié par l'intermédiaire d'une fixation à points multiples à la carrosserie de véhicule (10).

2. Dispositif de suspension selon la revendication 1, **caractérisé en ce que** le support de groupe (20), de préférence un support de groupe (20) réalisé par des nervures de renforcement et des cavités avec des parois de boîtier (20c) présente une cavité (20b) ouverte en tant qu'espace de réception, dans laquelle le corps d'amortissement (18a) est reçu et/ou inséré.

3. Dispositif de suspension selon les revendications 1 et 2, **caractérisé en ce que** la tige de traction ou de pression (18d) traverse le corps d'amortissement (18a) réalisé de préférence sous la forme d'une douille et est reliée, en particulier est vissée, au palier d'appui (18), de préférence à une plaque de palier (18b) supérieure du palier d'appui (18).

4. Dispositif de suspension selon la revendication 3, **caractérisé en ce que** le palier d'appui (18) présente une plaque de palier (18c), en particulier une plaque de palier (18c) inférieure dans le sens axial de la hauteur de véhicule par rapport à la cavité (20b), qui surmonte à la manière d'une bride la cavité (20b) et/ou lesdites sections de paroi (20c) de délimitation et est reliée au support de groupe (20), en particulier est reliée, en particulier est vissée, à des sections de paroi (20c) associées du support de groupe (20).

5. Dispositif de suspension selon l'une quelconque des revendications précédentes, **caractérisé en ce qu'**au moins un, de préférence un unique bras de boîtier (16c) situé plus bas, fixé au niveau d'un longeron transversal (12) du châssis auxiliaire (10) et dépassant vers le support de groupe (20) et plusieurs, de préférence deux, brides de boîtier (16b) positionnées plus haut par rapport à celui-ci dans le sens axial de la hauteur de véhicule, fixées au niveau d'un longeron longitudinal (14) du châssis auxiliaire (10) sont prévus au niveau du boîtier (16a) du palier de groupe (16) pour relier celui-ci à un châssis auxiliaire (10) disposé au niveau de la carrosserie de véhicule.

6. Dispositif de suspension selon la revendication 5, **caractérisé en ce que** la tige de traction ou de pression (18d) du palier d'appui (18) est rattachée, en particulier est articulée, au niveau du longeron transversal (12) de préférence de manière directement adjacente à l'emplacement de rattachement de longeron transversal de l'au moins un bras de boîtier (16c), ou qu'un emplacement de palier (18e) de la tige de traction ou de pression (18d) du palier d'appui (18) est intégré au moins en partie dans le bras de boîtier (16c).

7. Dispositif de suspension selon l'une quelconque des revendications précédentes, **caractérisé en ce que** le support de groupe (20) recevant le corps d'amortissement (18a) du palier d'appui (18) est fabriqué en tant que pièce de fonte et/ou à partir d'un alliage de métaux légers.

8. Dispositif de suspension selon l'une quelconque des revendications précédentes, **caractérisé en ce que** le corps d'amortissement (18a) présente un corps en élastomère avec une rigidité élastique définie ou est formé par un élément de ce type, qui présente une ouverture de passage centrale, par laquelle la tige de traction ou de pression (18d) est guidée avec un interstice radial défini ou de manière adaptée en contour.
